# EUROPÄISCHE PATENTANMELDUNG

(11) **EP 1 748 283 A2**
(43) Veröffentlichungstag der Anmeldung: **31.01.2007**
(21) Anmeldenummer: 06015018.2
(22) Anmeldetag: 19.07.2006
(51) Int. Cl.: G01D 5/16

(54) **Magnetfeldempfindlicher Sensor**

(30) Priorität: 19.07.2005 DE 202005011361 U
(71) Anmelder: Woelke Magnetbandtechnik GmbH & Co. KG, 85301 Schweitenkirchen (DE)
(72) Erfinder: Meyerweissflog, Stefan Woelke Magnetbandtechnik, 85301 Schweitenkirchen (DE)
(74) Vertreter: Laufhütte, Dieter

(57) **Zusammenfassung**

Die Erfindung betrifft einen Sensor, bevorzugt für magnetische Dreh- bzw. Lineargebersysteme, die einen im gegebenen Abstand vom Sensor angeordneten Maßstab aufweisen, mit mindestens einem magnetfeldempfindlichen GMR-Sensorelement, das in einem Gehäuse angeordnet ist, wobei das Gehäuse zusätzlich jeweils eine dem mindestens einen GMR-Sensorelement zugeordneten Magnetfeldquelle aufweist, wobei die Magnetfeldquelle in einer diese U-förmig umschließenden Abschirmung aufgenommen ist und dass die Magnetfeldquelle, das mindestens eine GMR-Sensorelement und/oder das Gehäuse bei gegebenem Abstand um einen vorbestimmten Winkel gegenüber der Bezugsebene des Maßstabs verkippt sind.

## Beschreibung

Die Erfindung betrifft einen Sensor, der bevorzugt für magnetische Dreh- bzw. Lineargebersysteme geeignet ist, nach dem Oberbegriff des Anspruchs 1.

Für magnetische Dreh- bzw. Lineargebersysteme, bei denen der Maßstab aus weichmagnetischem Material (z. B. Zahnstange, Zahnrad oder genutetes Band aus weichmagnetischem Stahl) oder aus sinnvoll zueinander angeordneten Permanentmagneten (z. B. kleine Permanentmagnete auf einer Leiste oder verschieden magnetisierte Bereiche in einem halbmagnetischen Band) besteht, werden als Abtasteinheit Sensoren verwendet, die neben dem eigentlichen magnetfeldempfindlichen Sensorelement mit einer konstanten Magnetquelle (z. B. Permanentmagnet) versehen sind. Als magnetfeldempfindliche Sensorelemente wurden in der Vergangenheit magnetfeldempfindliche Widerstände (Feldplatte, magnetoresistives Element) eingesetzt.

Derartige magnetfeldempfindliche Sensoren sind bereits bekannt. In der DE 32 40 794 C2 und in der DE 39 26 328 A1 werden derartige Sensoren zum Messen von Längen und Winkeln beschrieben. Aus der DE 38 29 390 A1 ist es bekannt, diese magnetfeldempfindlichen Sensoren zur Drehzahlmessung zu verwenden.

Wie beispielsweise aus der DE 296 14 974 U1 bekannt, werden für ein Gebersystem zwei sinusförmige Signalspuren, um 90° phasenversetzt, und eine Referenzsignalspur, die einen Einzelimpuls zeigt, benötigt.

Seit geraumer Zeit werden als Sensorelemente sogenannte GMR-Sensoren (d. h. giant-magnetoresistive Sensoren) eingesetzt. Grundsätzliches Ziel der Sensorkonfektionierung ist die Erzeugung eines bestimmten Übertragungsverhaltens, d. h. einer Sensorkennlinie mit möglichst großem Nutzsignalhub, das heißt großem Nutzsignal/Störleistungsverhältnis. Bei der Einstellung einer "linearen" Sensorkennlinie wird als Ausgangssignal ein sinusförmiges Signal oder zumindest ein dem Sinus nahekommendes Signal, das im folgenden auch als sinusförmig bezeichnet wird, erwartet.

In der Praxis ergeben sich aber bei der Konfektionierung beispielsweise eines zweispurigen Sensorelementes, wie es entsprechend der DE 296 14 974 U1 eingesetzt werden soll unter Berücksichtigung der Herstellervorschriften der GMR-Sensorhersteller (beispielsweise die Firma NVE Corporation) keine sinusförmigen Ausgangssignale mit geeignetem Nutzsignalhub. Unter Berücksichtigung der üblichen Einbauvorschriften weisen die Signale unterschiedlich starke nicht lineare Verzerrungen auf und es zeigen sich unterschiedliche Offset-Spannungen und Signalhübe. Durch Vergrößerung des Arbeitsabstandes zwischen den Sensorelementen und dem mechanischen Maßstab nähern sich die Signalverläufe einem Sinus an. Hierdurch bedingt sind aber überproportional abnehmende Signalamplituden, was zu einem inakzeptablen Nutzsignal/Störleistungsverhältnis führt.

Aufgabe der Erfindung ist es daher, einen magnetfeldempfindlichen Sensor der eingangs angegebenen Gattung derart weiterzubilden, dass bei möglichst großem Nutzsignalhub ein gewünschter Signalverlauf ohne unerwünschte Störungen erzielt werden kann.

Erfindungsgemäß wird diese Aufgabe durch einen Sensor mit der Merkmalskombination des Anspruchs 1 gelöst. Demnach wird ein Sensor vorgeschlagen, der mindestens ein magnetfeldempfindliches GMR-Sensorelement aufweist, das in einem Gehäuse angeordnet ist, wobei das Gehäuse zusätzlich jeweils eine dem mindestens einen GMR-Sensorelement zugeordnete Magnetfeldquelle aufweist. Erfindungsgemäß ist die Magnetfeldquelle in einer U-förmigen Abschirmung eingebettet. Die Magnetfeldquelle, das mindestens eine GMR-Sensorelement und/oder das Gehäuse ist bei gegebenem Abstand um einen vorbestimmten Winkel gegenüber der Bezugsebene des Maßstabs verkippt. Aufgrund dieser Verkippung kann das Sensorelement in seinem Arbeitspunkt U₀ (elektrische Ausgangsspannung) bzw. B₀ (magnetische Induktion) versetzt werden. Ausgehend von diesem Arbeitspunkt wird das Magnetfeld B(t) im Meßbereich des Sensorelementes beispielsweise durch die homogene alternierende Verzahnung des zeitlich bewegten mechanischen Maßstabes gleichförmig alternierend, das heißt hier beispielsweise sinusförmig, um den Arbeitspunkt B₀ moduliert. Das Sensorelement antwortet auf das zeitlich moduliertes Magnetfeld B(t) mit einem sinusförmigen elektrischen Ausgangswert U(B(t)). Das Übertragungsverhalten U(B(t)) des Sensorelementes wird demzufolge durch die Arbeitspunkteinstellung, das heißt dem Grad der Verkippung der Magnetfeldquelle, des GMR-Sensorelementes bzw. des Gehäuses, in welchem diese montiert sind, linearisiert.

Durch entsprechende Winkelverkippung der vorgenannten Elemente kann aber auch ein gewünschter spezieller Signalverlauf gewählt werden. Es kann für bestimmte Messungen sinnvoll sein, eine Sensorkennlinie mit nicht-linearem Übertragungsverhalten einzustellen. Dies kann dann kontrolliert durch die Wahl des entsprechenden Kippwinkels, beispielsweise der Magnetfeldquelle, des GMR-Sensorelementes und/oder des Gehäuses, in welchem diese eingebaut sind, erfolgen.

Bevorzugte Ausgestaltungen der Erfindung ergeben sich aus den sich an den Hauptanspruch anschließenden Unteransprüchen.

Demnach besteht die U-förmige Abschirmung aus einem weichmagnetischen Werkstoff. Durch die Abschirmung wird in vorteilhafter Weise das sogenannte Übersprechen der Signale verhindert. Hier ist unter Übersprechen der Signale zu verstehen, dass wellenförmige Störsignale sowie kleinkurvige kontinuierliche Einstreuungen im Signalverlauf auftreten.

Weiterhin kann ein GMR-Sensorelement einer im Maßstab vorgesehenen Referenzsignalspur zur Erzeugung eines Referenzsignals zugeordnet sein.

Zwei GMR-Sensorelemente können derart der Inkrementalsignalspur zugeordnet sein, dass zwei phasenversetzte Signale, beispielsweise um 90° phasenversetzte Signale, erzeugt werden, wie dies grundsätzlich bereits aus der DE 296 14 974 U1 - dort aber unter Verwendung von Feldplatten - bekannt ist.

Besonders vorteilhaft ist es, wenn der eingesetzte Permanentmagnet quaderförmig ist, wobei seine Abmessungen im Verhältnis zum zugeordneten GMR-Sensorelement so gewählt sind, dass ein weitgehend homogenes Magnetfeld auf das GMR-Sensorelement einwirkt.

Der Permanentmagnet weist vorteilhaft eine Magnetfeldstärke von größer als 0,2 T auf.

Das Gehäuse, in welchem die GMR-Sensoren und die zugeordneten Permanentmagnete eingebaut sind, besteht vorteilhaft aus Aluminium.

Dabei kann das Gehäuse eine dünne Vorderwandung aufweisen, hinter der unmittelbar das mindestens GMR-Sensorelement angeordnet ist.

Ganz besonders vorteilhaft ist mindestens eine Magnetfeldquelle über eine Kunststoffhalterung im Gehäuse fixiert. Eine derartige Kunststoffhalterung weist mindestens einen Schacht zur Aufnahme der Magnetfeldquelle auf. Die Magnetfeldquelle kann jeweils unter dem gewünschten Kippwinkel in den Schacht eingeklebt sein.

Vorteilhaft können in der Kunststoffhalterung zwei Magnetfeldquellen aufgenommen sein, von denen eine dem mindestens einen GMR-Sensorelement, welches der Inkrementalsignalspur zugeordnet ist, gegenüberliegt, während die andere Magnetfeldquelle dem GMR-Sensorelement, welches der Referenzsignalspur zugeordnet ist, gegenüberliegt.

Beide Magnetfeldquellen sind gegeneinander in unterschiedlicher Lage in der Kunststoffhalterung gehalten.

Vorteilhaft kann auch ein großer Magnet Verwendung finden, der dann geringer quaderförmig bis quadratisch ist und vorteilhaft in der Kunststoffhalterung gekippt fixiert ist und so das mindestens eine GMR-Sensorelement, welches der Inkrementalspur zugeordnet ist und das GMR-Sensorelement, welches der Referenzsignalspur zugeordnet ist gemeinsam in Einem überdeckt und magnetisch durchflutet.

Sämtliche GMR-Sensoren und Magnetfeldquellen sind gemäß einer weiteren Ausgestaltung der Erfindung in einem festen Zuordnungsverhältnis zueinander im Gehäuse eingesetzt.

Dabei ist die geometrische Zuordnung vorteilhaft derart gewählt, dass eine "lineare" Sensorkennlinie erzeugbar ist.

Alternativ kann die geometrische Zuordnung aber auch so gewählt sein, dass eine bestimmte gezielte "nichtlineare" Sensorkennlinie erzeugt wird.

Die Erfindung bezieht sich weiterhin auf einen Maßstab für einen vorbeschriebenen Sensor welcher aus einem Zahnrad oder einer Zahnstange aus ferromagnetischem bzw. weichmagnetischem Material besteht. Dieser Maßstab weist vorteilhaft eine Evolventenverzahnung auf.

Es ist zusätzlich eine Referenzspur zur Erzeugung eines Referenzsignals vorhanden, wobei auf der Referenzspur ein Zahn zur Erzeugung des Referenzsignals angeordnet sein kann.

Dieser Zahn auf der Referenzspur kann aus einem herkömmlichen Evolventenzahn gefräst sein. Das Referenzsignal kann aber auch durch eine ins Zahnrad eingefräste Nut mit abgestimmter Breite, die gegenüber dem gesamten auf eine bestimmte Höhe gedrehten Umfang der Referenzspur zurücktritt, erzeugt werden.

Gemäß der vorliegenden Erfindung kann der vorbeschriebene Sensor als Dreh- oder Lineargeber eingesetzt werden.

Vorteilhaft läßt sich der vorbeschriebene Sensor aber auch zur Vermessung eines Zahnprofils verwenden.

Weitere Merkmale, Einzelheiten und Vorteile der Erfindung ergeben sich aus den in der Zeichnung dargestellten Ausführungsbeispielen. Es zeigen:
- Figur 1:: eine perspektivische Ansicht eines Sensorsystems in schematischer Form, bei welchem der erfindungsgemäße Sensor verwendbar ist,
- Figur 2:: die gemäß einem bevorzugten Ausführungsbeispiel erzeugten Ausgangssignale des Sensorsystems,
- Figur 3a:: einen Schnitt durch ein Gehäuse, in dem Sensorelemente und Magnete montiert sind,
- Figur 3b:: eine schematische Draufsicht auf das Gehäuse gemäß Figur 3a,
- Figur 4:: eine schematische Prinzipskizze der Ausrichtung des Gehäuses, des Sensorelementes und des Permanentmagneten zu einem Zahn des Maßstabes und
- Figur 5:: eine schematische Darstellung der Formgebung des Referenzzahnes auf der Referenzspur.

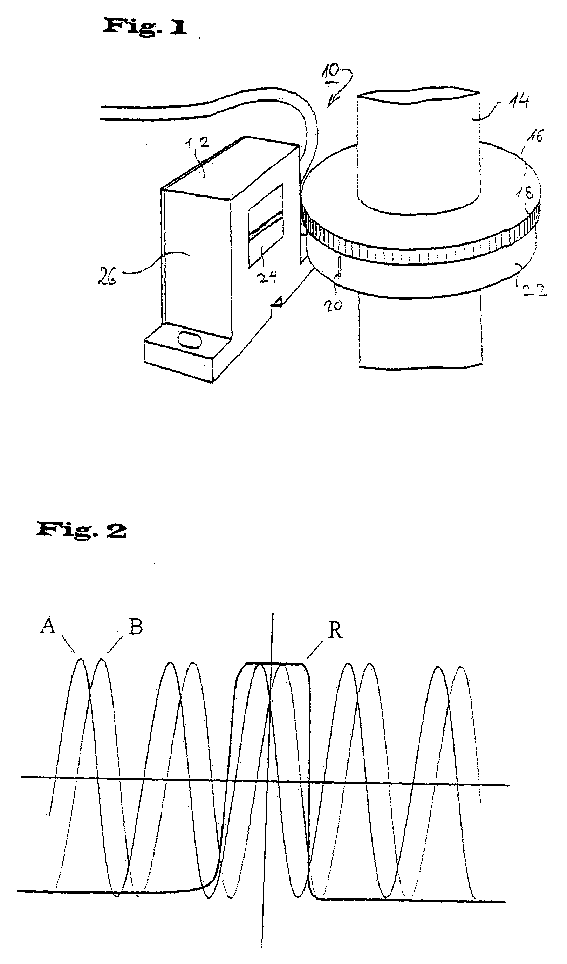

In der Figur 1 ist beispielhaft ein Drehgebersystem 10 gezeigt, welches einen Geber bzw. Abtastkopf 12 sowie ein auf einer Welle 14 angeordnetes, als Maßstab dienendes Zahnrad 16 mit einer hier nicht näher dargestellten evolventen Verzahnung 18 aufweist. Das hier verwendete Meßprinzip beruht auf einer berührungslosen Abtastung der verzahnten, ferromagnetischen Maßstäbe 16 mittels magnetfeldempfindlicher Sensorelemente, die in dem Geber bzw. Abtaster eingebaut sind.

Das Zahnrad 16 weist eine mit einer gleichmäßigen evolventen Verzahnung versehene Inkrementalspur 18 sowie eine mit einem einzigen Referenzzahn 20 versehene Nullspur 22 auf.

In einem Sensorfenster 24 innerhalb des Gehäuses 26 sind, jeweils auf der Höhe der Inkrementalspur 18, hier nicht näher dargestellte Sensoren angeordnet. Ferner ist auf der Höhe der Nullspur 22 ebenfalls ein Sensor ausgebildet. Das hier in der Zeichnung dargestellte Sensorfenster 24 ist in Realität mittels einer dünnen Aluminiumschicht abgedeckt.

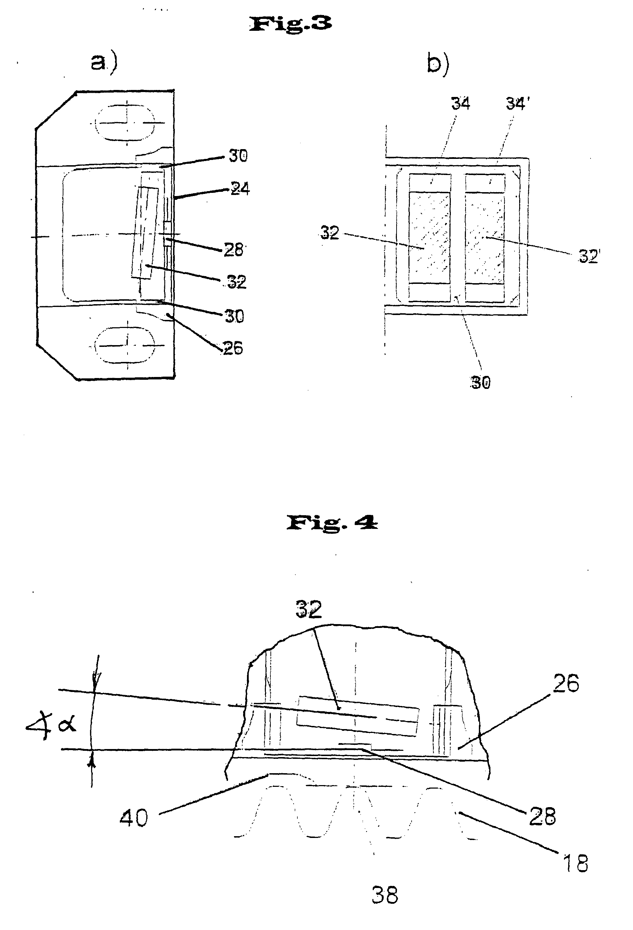

Der Aufbau der Sensoreinheit ergibt sich aus der schematischen Darstellung gemäß Figur 3a bzw. 3b. Dort ist nochmals das Gehäuse 26, welches aus Aluminium besteht, dargestellt. Im Bereich des Sensorfensters 24 sind die GMR-Sensoren 28 angeordnet. In einer aus Kunststoff hergestellten Rahmenkonstruktion 30, welche im Gehäuse 26 aufgenommen ist, ist ein quaderförmiger Permanentmagnet 32 gehalten. Dabei ist der Permanentmagnet nicht unmittelbar in dem Kunststoffgehäuse gehalten, sondern er ist zunächst in einer U-förmigen Abschirmung eingebettet. Wie in der Figur 3b gezeigt ist, sind hier zwei Permanentmagnete 32 und 32' mit ihrer hier nicht dargestellten U-förmigen Abschirmung in entsprechende Schächte 34 und 34' des Kunststoffrahmens 30 eingeklebt.

Zur Vereinfachung der Positionierung der Permanentmagnete mit ihren Abschirmungen können Anschläge im Kunststoffrahmen vorgesehen sein. Aufgrund der notwendigen Feinjustierung bieten sich die Anschläge aber hauptsächlich zur Positionierung des Permanentmagneten der Referenzspur an.

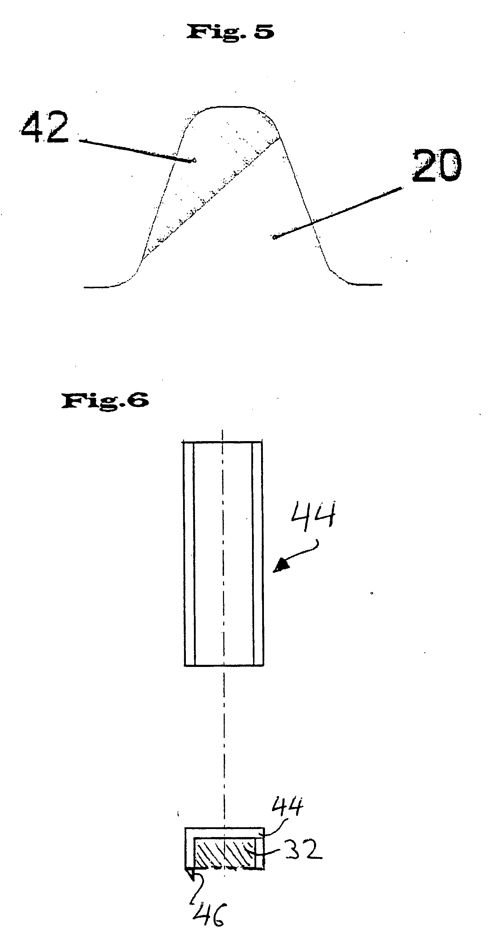

Die U-förmige Abschirmung 44 ist z.B. in Fig. 6 dargestellt. Die obere Skizze zeigt eine Draufsicht und die untere Skizze zeigt einen Querschnitt, wobei hier ein Permanentmagnet eingebettet ist. Die Abschirmung besteht aus einem weichmagnetischen Werkstoff, beispielsweise aus 90MnCrV8. Wie aus der linken Seite der Querschnittsdarstellung in Fig. 6 ersichtlich kann die jeweilige Kante so profiliert sein, daß sich eine spitze Kante 46 bündig zum Magnet ergibt. Alternativ kann die Kante aber auch wie auf der rechten Seite dieser Zeichnung ausgeführt sein. Neben der U-förmigen Umschließung können aber auch die Stirnseiten zusätzlich umschlossen sein.

Bei einer Drehbewegung des Zahnrads 16 mit der Welle 14 wird das von den Permanentmagneten 32 bzw. 32' an der jeweiligen Sensoreinheit 28 erzeugte Magnetfeld derart verändert, dass ein elektrisches Signal erzeugt wird.

Durch die Drehung des Zahnrades 16 erhält man ein annähernd sinusförmiges Spannungssignal am Ausgang einer entsprechenden Brückenschaltung. Die Sensoreinheiten 28 sind derart angeordnet, dass sie ein jeweils um 90° phasenverschobenes Signal erzeugen. Die um 90° phasenverschobenen Signale A und B der Sensoreinheiten sind beispielhaft in Figur 2 dargestellt.

Soll nun ein bestimmtes Übertragungsverhalten, also eine bestimmte Sensorkennlinie bei möglichst großem Nutzsignalhub, das heißt großem Nutzsignal/Störleistungsverhältnis, erzeugt werden, wird die Magnetfeldquelle, das mindestens eine GMR-Sensorelement und/oder das Gehäuse bei gegebenem Abstand um einen vorbestimmten Winkel gegenüber der Bezugsebene des Maßstabs verkippt. Die entsprechenden geometrischen Verhältnisse werden anhand der Darstellung gemäß Figur 4 erläutert. Dort ist die Bezugsebene durch einen Zahn 38 einer evolventen Verzahnung dargestellt. Senkrecht zu dem Zahn bzw. parallel zu der Tangentialebene 40 bezogen auf den Zahn 38 ist hier das Gehäuse 26 ausgerichtet. In der Darstellung gemäß Figur 4 ist auch das Sensorelement 28, das heißt der GMR-Sensor, parallel zur Tangentialebene 40 bzw. zum Gehäuse 26 ausgerichtet. Dagegen ist der Permanentmagnet 32, der hier aus einem quaderförmigen Körper besteht unter einem Winkel α gegenüber der Tangentialebene 40 verkippt. Im Rahmen der Erfindung ist es aber auch möglich, das Gehäuse 26 und/oder den GMR-Sensor 28 zu verkippen, um den Magneten 32 parallel zur Tangentialebene 40 auszurichten.

Bei der Optimierung des Signals ist zu berücksichtigen, dass die Periodenlänge des mechanischen Maßstabes eine entsprechend angepaßte Abtastlänge des verwendeten Sensorelementes erfordert. Weiterhin ergibt sich zur Signaloptimierung ein bestimmtes Verhältnis der Abstände zwischen dem mechanischen Maßstab und dem Sensorelement und dem Sensorelement und dem Permanentmagneten, das ebenfalls einzustellen ist. Versuche haben ergeben, dass die dem Sensor zugewandte Fläche des Permanentmagneten mindestens Abmessungen von 11 x 5 mm² aufweisen soll. Hierdurch wird ein ausreichend homogenes Magnetfeld im Bereich des Sensorelementes, das eine Größe bis zu ca. 1 x 0,125 mm² aufweist, erzeugt. Bei Verwendung kleinerer Magnete sind größere Unterschiede der OffsetSpannung der einzelnen Signalspuren zu beobachten.

In der Figur 2 ist neben den Nutzsignalen A und B auch noch ein Referenzsignal R dargestellt, welches von einer parallelen Sensoreinheit, die auf Höhe der Nullspur 22 angeordnet ist, beim Vorbeilaufen des Referenzzahnes 20 erzeugt wird. Dabei kann, wie in Figur 5 dargestellt, der Referenzzahn 20 aus einem üblichen evolventen Zahn durch entsprechende Profilbearbeitung hergestellt werden. Ein Evolventenzahn wird dadurch bearbeitet, dass der in der Figur 5 beispielhaft schraffierte Teil 42 weggefräst wird, so dass eine Art Sägezahnprofilierung stehen bleibt. Durch die Sägezahnprofilierung dieses Referenzzahnes 20 wird eine Bündelung der Magnetfeldlinien erreicht, die unabhängig von der verwendeten Sensorart die Erzeugung des korrekten Referenzsignals sicherstellt. Auch bei der Verwendung von Feldplatten anstelle von GMR-Sensoren wird das entsprechend richtige Referenzsignal erzeugt.

Hier nicht näher dargestellt ist die Verarbeitungselektronik. Diese ist konventionell ausgeführt. Sie kann in einem externen Elektronikmodul angeordnet sein. Vorteilhaft ist die Verarbeitungselektronik aber im Sensorkopf angeordnet. In bekannter Weise erfolgt durch die Verarbeitungselektronik die Verstärkung, die Parametereinstellung von Offset und Amplitude, sowie der Phasenlage und der Lage des Referenzsignals.

## Patentansprüche

1. Sensor, bevorzugt für magnetische Dreh- bzw. Lineargebersysteme, die einen im gegebenen Abstand vom Sensor angeordneten Maßstab aufweisen, mit mindestens einem magnetfeldempfindlichen GMR-Sensorelement, das in einem Gehäuse angeordnet ist, wobei das Gehäuse zusätzlich jeweils eine dem mindestens einen GMR-Sensorelement zugeordneten Magnetfeldquelle aufweist,
**dadurch gekennzeichnet,**
**dass** die Magnetfeldquelle in einer diese U-förmig umschließenden Abschirmung aufgenommen ist und dass die Magnetfeldquelle, das mindestens eine GMR-Sensorelement und/oder das Gehäuse bei gegebenem Abstand um einen vorbestimmten Winkel gegenüber der Bezugsebene des Maßstabs verkippt sind.

2. Sensor nach Anspruch 1, **dadurch gekennzeichnet, dass** die U-förmige Abschirmung aus einem weichmagnetischen Material besteht.

3. Sensor nach einem der vorangehenden Ansprüche, **dadurch gekennzeichnet, dass** ein GMR-Sensorelement einer Referenzsignalspur im Maßstab zur Erzeugung eines Referenzsignals zugeordnet ist.

4. Sensor nach Anspruch 3, **dadurch gekennzeichnet, dass** zwei GMR-Sensorelemente derart der Inkrementalsignalspur zugeordnet sind, dass sie zwei phasenversetzte Signale erzeugen.

5. Sensor nach einem der vorangehenden Ansprüche, **dadurch gekennzeichnet, dass** die Magnetfeldquelle mindestens aus einem Permanentmagneten besteht.

6. Sensor nach Anspruch 5, **dadurch gekennzeichnet, dass** der jeweils eingesetzte Permanentmagnet quaderförmig ist, wobei seine Abmessungen im Verhältnis zum zugeordneten GMR-Sensorelement so gewählt ist, dass ein weitgehend homogenes Magnetfeld auf das GMR-Sensorelement einwirkt.

7. Sensor nach Anspruch 5 oder 6, **dadurch gekennzeichnet, dass** der Permanentmagnet eine Magnetfeldstärke größer als 0,8 T aufweist.

8. Sensor nach einem der vorangehenden Ansprüche, **dadurch gekennzeichnet, dass** das Gehäuse aus Aluminium besteht.

9. Sensor nach einem der vorangehenden Ansprüche, **dadurch gekennzeichnet, dass** das Gehäuse eine dünne Vorderwandung aufweist, hinter der unmittelbar das mindestens eine GMR-Sensorelement angeordnet ist.

10. Sensor nach einem der vorangehenden Ansprüche, **dadurch gekennzeichnet, dass** die Magnetfeldquelle über eine Kunststoffhalterung im Gehäuse fixiert ist.

11. Sensor nach einem der vorangehenden Ansprüche, **dadurch gekennzeichnet, dass** die Kunststoffhalterung mindestens einen Schacht zur Aufnahme der Magnetfeldquelle aufweist.

12. Sensor nach Anspruch 11, **dadurch gekennzeichnet, dass** die Magnetfeldquelle jeweils unter dem gewünschten Winkel in den Schacht eingeklebt ist.

13. Sensor nach einem der Ansprüche 10 bis 12, **dadurch gekennzeichnet, dass** in der Kunststoffhalterung zwei Magnetfeldquellen mit der diese umschließenden U-förmigen Abschirmung aufgenommen sind, von denen eine dem mindestens einen GMR-Sensorelement, welches der Inkrementalsignalspur zugeordnet ist, gegenüberliegt, während die andere dem GMR-Sensorelement, welches der Referenzsignalspur zugeordnet ist, gegenüberliegt.

14. Sensor nach Anspruch 13, **dadurch gekennzeichnet, dass** die beiden Magnetfeldquellen gegeneinander in unterschiedlicher Lage in der Kunststoffhalterung gehalten sind oder ein großer Manget die Sensorelemente beider Spuren überdeckend in der Kunststoffhalterung gehalten wird.

15. Sensor nach einem der vorangehenden Ansprüche, **dadurch gekennzeichnet, dass** sämtliche GMR-Sensoren und Magnetfeldquellen in einem festen Zuordnungsverhältnis zueinander im Gehäuse eingesetzt sind.

16. Sensor nach einem der vorangehenden Ansprüche, **dadurch gekennzeichnet, dass** die geometrische Zuordnung derart gewählt ist, dass eine lineare Sensorkennlinie erzeugbar ist.

17. Sensor nach einem der vorangehenden Ansprüche, **dadurch gekennzeichnet, dass** die geometrische Zuordnung derart gewählt ist, dass eine bestimmte nichtlineare Sensorkennlinie erzeugbar ist.

18. Maßstab für einen Sensor nach einem der vorangehenden Ansprüche, **dadurch gekennzeichnet, dass** er aus einem Zahnrad oder einer Zahnstange aus ferromagnetischen bzw. weichmagnetischen Material besteht.

19. Maßstab nach Anspruch 18, **dadurch gekennzeichnet, dass** er eine Evolventenverzahnung aufweist.

20. Maßstab nach Anspruch 19 **gekennzeichnet durch** eine Referenzspur zur Erzeugung eines Referenzsignals.

21. Maßstab nach Anspruch 20, **dadurch gekennzeichnet, dass** auf der Referenzspur ein Zahn oder eine Nut zur Erzeugung des Referenzsignals angeordnet ist.

22. Maßstab vorteilhaft nach Anspruch 19 oder 20, **dadurch gekennzeichnet, dass** der Zahn auf der Referenzspur aus einem Evolventenzahn gefräst ist.

23. Verwendung des Sensors nach einem der vorangehenden Ansprüche als Dreh- oder Lineargeber.

24. Verwendung des Sensors nach einem der vorangehenden Ansprüche zur Vermessung des Zahnprofils.
